(19)

**Europäisches Patentamt**
**European Patent Office**
**Office européen des brevets**

(11) **EP 4 667 988 A1**

(12) **EUROPEAN PATENT APPLICATION**

(43) Date of publication:
**24.12.2025 Bulletin 2025/52**

(51) International Patent Classification (IPC):
**G02B 6/34** (2006.01)

(21) Application number: **24182927.4**

(52) Cooperative Patent Classification (CPC):
**G02B 6/34**

(22) Date of filing: **18.06.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **AGPhotonics, S.L.**
**29010 Málaga (ES)**

(72) Inventors:
- **GINEL-MORENO, Pablo**
**29017 Málaga (ES)**

- **BARONA-RUIZ, Miguel**
**29018 Málaga (ES)**
- **MORENO POZAS, Laureano**
**29012 Málaga (ES)**
- **ORTEGA-MOÑUX, Alejandro**
**29590 Málaga (ES)**
- **WANGÜEMERT-PÉREZ, Juan Gonzalo**
**29018 Málaga (ES)**
- **HALIR, Robert**
**29004 Málaga (ES)**

(74) Representative: **Elion IP, S.L.**
**Paseo Castellana, 150-4 dcha**
**28046 Madrid (ES)**

(54) **OPTICAL ANTENNA DEVICE**

(57)     An optical antenna device for radiating and/or capturing light of at least one wavelength, the optical antenna device comprising a grating coupler comprising at least one core material, the grating coupler is planar along first and second axes, the at least one core material is arranged such that at least two perturbations are formed sequentially arranged one after the other along the first axis, each of the at least two perturbations comprises at least two regions along the first axis, a length of each region of the at least two regions is shorter than half of the at least one wavelength divided by a Bloch-Floquet effective index of the grating coupler and a sum of the lengths of the at least two regions equals the length of the respective perturbation, one or more optical properties of at least two regions of the at least two regions of a respective perturbation are different, and the at least two perturbations are formed such that a total length of the at least two perturbations along the first axis is greater than twenty times the at least one wavelength. Also, a method of manufacturing an optical antenna device and a method of radiating light of at least one wavelength.

FIG. 1

## Description

### TECHNICAL FIELD

The present disclosure relates to the field of photonics. More particularly, the present disclosure relates to optical antenna devices that may feature large beam sizes and methods associated therewith.

### BACKGROUND

Optical systems require miniaturization for them to be embedded in integrated optical devices and chips. Improvements in miniaturization have been achieved in recent years, yet the interfacing of the optical systems with others and/or free space is still a significant challenge. As the size of waveguides has become smaller, it has been become more difficult to couple light out from the waveguides and into the waveguides in an effective manner, i.e., with reduced losses.

Among the available existing coupling devices are inverse tapers and grating couplers. Such devices may generate fixed off-chip beams with diameters of about 10 $\mu$m, but are not suitable for applications that require beams with greater diameters.

Some existing optical antennas intended to provide beams with greater diameters use both a mode transformer that expands in a beam lateral direction and a grating coupler that radiates the beam with a desired longitudinal profile. To that end, the grating couplers providing a weak, well-controlled radiation strength need to be provided with either additional shallow etch depth or a polymer overlay, all of which make the optical antenna more expensive and complex as the manufacturing process also features such drawbacks. Further, if the grating couplers are to be made on silicon-on-insulator platforms, which are one of most widely used, the manufacturing thereof becomes even more complex if scattering is to be kept at a reduced level.

Also, devices known as Optical phased arrays (OPAs) are used to obtain steerable beams with mode field diameters greater than one millimeter, typically used in Lidar. OPAs are periodic arrangements of long optical antennas fed through a phase-tunable network of waveguides. However, the periodic spacing of the antennas also causes side-lobes in the radiated field, and, conversely, limits their collecting efficiency since light that impinges between the antennas is not coupled into the chip.

There is interest in providing optical antenna devices that have a performance better than that of the aforementioned examples and which, preferably, may be produced at scale.

### SUMMARY

A first aspect relates to an optical antenna device, which is preferably an integrated optical antenna device, that is to say, an optical antenna device within a photonic chip. The optical antenna device may be used for radiating light of at least one wavelength, and/or for capturing light of at least one wavelength. The optical antenna device comprises a grating coupler comprising at least one core material. The grating coupler is planar along first and second axes that are perpendicular. The at least one core material is arranged such that at least a plurality of perturbations are formed such that the perturbations thereof are sequentially arranged one after the other along the first axis. Each perturbation of the plurality of perturbations comprises a plurality of regions along the first axis. A length of each region of the plurality regions is shorter than half of the at least one wavelength divided by a Bloch-Floquet effective index of the grating coupler and/or shorter than a first order Bragg period and/or than the at least one wavelength. A sum of the lengths of the plurality of regions equals the length of the respective perturbation, so that:

$$\Lambda_{\text{rad}} = \sum \Lambda_{\text{reg}}$$

Where $\Lambda_{\text{rad}}$ is the period of the respective perturbation, $\Lambda_{\text{reg}}$ is the period of the region; each perturbation is, namely corresponds to, a radiation period. Accordingly, the period of the respective perturbation is the sum of the periods of all regions of the perturbation.

Further, one or more optical properties of at least two regions of the plurality of regions of a respective perturbation are different.

The regions are configured to change an effective refractive index thereof and, thus, of the respective perturbation. To that end, the optical property or properties that may be different is/are selected from the group consisting of: duty cycle, pitch, length, width, etch depth (when the regions are etched) and/or core material.

Further, the regions of the perturbation are preferably, but not necessarily, spaced at regular intervals. That is to say, each period preferably meets the following: $\Lambda_{\text{reg}} = \Lambda_{\text{rad}}$ / n; where n is the number of regions in the plurality of regions of the respective perturbation. Periods of each perturbation, i.e., grating structure, of the plurality of perturbations are the same or substantially the same; that is to say, the period of a perturbation does not differ by more than 10% from the period of some other perturbation of the plurality of perturbations.

Owing to the arrangement of the plurality of perturbations with respect to the regions with different optical properties in at least portions thereof, the diffractive grating coupler is adapted to radiate a beam of the light that propagates through the coupler off the optical antenna device. In this sense, the radiation of the beam of the light may be of Gaussian profile or an exponential profile depending on the strength of each perturbation, particularly, the variation in strength between the perturbations. To this end, the grating coupler has, in some embodiments, the plurality of perturbations sequentially arranged so as to sequentially or progressively increase a grating strength of the perturbations; whereas, in some other embodiments, each perturbation of the plurality of perturbations has a grating strength equal to or substantially equal to (i.e., a 5.0 % variation or less, preferably 2.5 % variation or less, and more preferably 1.0 % variation or less) a grating strength of each other perturbation of the plurality of perturbations.

Regardless of the profile of the beam, the beam radiated may comprise a longitudinal mode field diameter equal to or greater than 100 $\mu$m and, in some embodiments, greater than 300 $\mu$m. By way of example, in some embodiments, the longitudinal mode field diameter is between 425 $\mu$m and 500 $\mu$m.

The radiation of light by the optical antenna device can be tailored by means of the effective refractive index of the regions of the perturbations. Particularly, radiation of light is achieved when the effective refractive index of at least two regions of the plurality of regions in a perturbation are different; or, in other words, there is radiation of light when a difference between effective refractive index of at least two regions of the plurality of regions in a perturbation is different from zero. By modifying the effective refractive index and, thus, the difference between them, radiation strength of the optical antenna device is controlled. One non-limiting way to change said effective refractive index is by means of the duty-cycle in the respective region.

The optical antenna device is capable of radiating and/or capturing light of at least one wavelength with a large beam and achieving miniaturization of the device itself. The light may have TE polarization (in-plane) and/or TM polarization (out-plane).

In the context of the present disclosure, the term plurality refers to two or more of the respective entity. For example, the plurality of perturbations has two or more perturbations.

In some embodiments, the plurality of perturbations is formed such that a total length of the plurality of perturbations along the first axis is greater than twenty times the at least one wavelength and/or the first order Bragg period. In some of these embodiments, the total length is greater than fifty times, and/or greater than one hundred times, and/or greater than one thousand times the at least one wavelength and/or the first order Bragg period.

In some embodiments, the plurality of perturbations comprises twenty or more perturbations along the first axis. In some of these embodiments, the plurality of perturbations comprises more than fifty, and/or one hundred, and/or one thousand perturbations. Each perturbation of the plurality of perturbations is arranged sequentially one after the other along the first axis.

For radiation of most light propagating through the optical antenna device, a larger length and/or number of perturbations are/is preferably present in the optical antenna device so that light not radiated by the grating coupler at some of the initial perturbations may be radiated at subsequent perturbations. It has been found out that the length between twenty and one thousand times the wavelength of the light and/or the number of perturbations between twenty and one thousand may be enough to radiate more than 90% of the propagated light, preferably more than 95% of the propagated light, and more preferably more than 99% of the propagated.

In some embodiments, the at least one core material is etched to form the plurality of perturbations.

Etching is part of a manufacturing process that may make the resulting optical antenna device cost-effective when few etching stages are needed for producing the device. In some embodiments, the at least one core is etched a single time, i.e., there is a single etching process, to form the plurality of perturbations, which makes the manufacturing process simpler and more cost-effective. This single etch process may be identical to the process used to define the interconnecting waveguides.

The etching is made to a certain depth greater than zero. Preferably but not necessarily, the depth of the etching is not greater than a thickness of the planar layer of the grating coupler. In some embodiments, the etching of the at least one core material is such that the amount of material etched in each region of the plurality of regions of a respective perturbation is different. That, in turn, may provide a different duty cycle for different parts of a region and/or a perturbation.

A duty cycle of each region of the plurality of regions may be defined, in some embodiments, as a ratio between a non-etched length of the region along the first axis and a full length of the region along the first axis.

In some embodiments, each perturbation of the plurality of perturbations is quasi-periodic, i.e., with a 5.0 % variation or less in the periodicity of the perturbation; in some cases, the variation is 2.5 % of the periodicity of the perturbation or less. For example, but without limitation, a 1 nm variation in a period of 900 nm.

In some embodiments, each perturbation of the plurality of perturbations comprises two or more segments sequentially arranged one after the other along the second axis.

The segments along the second axis are periodic or quasi-periodic, and are adapted to reduce or avoid generation of radiation sidelobes. To this end, the period of the plurality of segments along the second axis is smaller than the at least one wavelength, and preferably smaller than a minimum half-wavelength in top and bottom claddings of the optical antenna device.

In some embodiments, lengths along the first axis of at least two regions of the plurality of regions of one, some or each perturbation of the plurality of perturbations are different.

When the duty cycles are tailored by means of the lengths of the regions, they are adjusted according to the radiation performance that is desired from the optical antenna device since the duty cycle corresponding to each region fulfills the following:

$$DC_i = a_i \,/\, \Lambda_{reg}$$

Where DC is the duty cycle, a is the length of the region along the first axis, and the subindex i refers to the i-th region within the respective perturbation.

In some embodiments, duty cycles of at least two regions of the plurality of regions of one, some or all perturbations are different.

In some embodiments, one, some or all regions of the plurality of regions is a subwavelength, SWG, grating structure for the at least one wavelength. Equivalently a period of each region is shorter than half of the at least one wavelength divided by the Bloch-Floquet effective index of the grating coupler.

The use of SWG grating structures makes it possible to tailor the radiating and/or capturing capabilities of the optical antenna device. In this sense, the period of the respective region or regions is the period of the SWG grating structure, i.e., $\Lambda_{SWG}$, and also fulfills the aforementioned equation:

$$\Lambda_{rad} = \sum \Lambda_{reg} = \sum \Lambda_{SWG}$$

In some embodiments, a first segment of a SWG grating structure of a plurality of SWG grating structures is of a first core material of the at least one core material and a second segment of said SWG grating structure is of a second core material of the at least one core material.

In some embodiments, the at least two segments of a first SWG grating structure of a plurality of SWG grating structures of a respective region are of the first core material and the at least two segments of a second SWG grating structure of the plurality of SWG grating structures of the same respective region are of the second core material.

The use of different core materials for segments of a same SWG grating structure or for segments of different SWG grating structures in a region allows to adjust the performance of the optical antenna device in what regards radiation and/or capturing of light.

In some embodiments, periods of at least two SWG grating structures of a plurality of SWG grating structures of a respective region are the same whereas, in some other embodiments, said periods are different.

In some embodiments, the optical antenna device further comprises a modal adapter. communicatively coupled with the grating coupler.

In some embodiments, the modal adapter comprises an evanescent coupler or a parabolic mode expansor.

The modal adapter, such as, e.g., the evanescent coupler or the parabolic mode expansor is, in some embodiments, directly coupled with the grating coupler, i.e., there is no other device between the two, whereas, in some other embodiments, the modal adapter is indirectly coupled with the grating coupler, i.e., there is one or more other devices between the two, for example a transition waveguide.

The modal adapter is adapted to widen the mode of the light when reaching the grating coupler, thereby achieving the desired beam width along the second axis. Conversely, when capturing light, the modal adapter narrows the mode of the light when reaching a port of the optical antenna device for coupling light to, e.g., another device of an optical system. To this end, the modal adapter has a first edge adapted for input and/or output of light, and a second edge for output and/or input of light, and the modal adapter is configured to adapt a mode of light reaching the first edge to a wider mode at the second edge.

In some embodiments, the optical antenna device further comprises a transition waveguide communicatively coupled with and adjacent to the grating coupler.

The transition waveguide is arranged next to the grating coupler and is adapted to reduce back-reflection from the grating coupler so that there is no back-reflection towards a port of the optical antenna device, and/or to reduce back-reflection from the port of the optical antenna device so that there is no back-reflection towards the grating coupler.

When both a transition waveguide and the modal adapter are provided in the optical antenna device, the transition waveguide is between the grating coupler and the modal adapter.

In some embodiments, the transition waveguide comprises at least one core material extending (preferably extending completely) along the second axis alternated in succession with at least one core material etched along the first axis. In some other embodiments, the transition waveguide comprises at least one core material extending (preferably extending completely) along the first axis, and having core material removed along the second axis to form, e.g., a fork-like structure.

In some embodiments, the plurality of regions comprises three or more regions sequentially arranged one after the other along the first axis.

A greater number of regions per perturbation provides more ways of adjusting the performance of the optical antenna device. Each such region has its own effective refractive index to that end.

In some embodiments, the optical antenna device is configured to radiate and/or capture light in at least one of the following wavelength ranges: 450-750 nm wavelength range, 800-900 nm wavelength range, 1250-1370 nm wavelength range, 1465-1640 nm wavelength range. Accordingly, in some embodiments, the at least one wavelength comprises a wavelength within any one of the aforesaid ranges, including endpoints thereof.

In some embodiments, the grating coupler is configured such that a light propagation direction at least comprises the first axis.

The first axis of the grating coupler corresponds to a dimension of the coupler (and/or of the optical antenna device) that has a maximum length. That is to say, the first axis corresponds to the lengthwise dimension of the grating coupler. The optical antenna device is configured to make light be propagated along the first axis for efficient radiation and/or capturing of light.

In some embodiments, the at least one core material comprises a single core material.

In some embodiments, a thickness of the at least one core material is configured to guide only one mode of light along a direction in which the thickness is measured (e.g., a third direction perpendicular to the first and second directions).

In some embodiments, a thickness of the at least one core material is equal to or smaller than half the at least one wavelength.

In some embodiments, the grating coupler does not comprise a reflector, e.g., a Bragg reflector.

Owing to the configuration of the optical antenna device, most of the light to be radiated off from the device gets radiated before reaching the end of the grating coupler. Hence, no reflector mirroring light back towards the beginning of the grating coupler is necessary to achieve radiation of most of the light.

A second aspect relates to a photonic device or system that includes an optical antenna device as described in the first aspect.

The (integrated) optical antenna device and, thus, the photonic device or system is configured for an application such as, for example, wireless optical communications, LIDAR, remote sensing, and vibrometry. In this sense, in some embodiments, the photonic device or system is a transmitter and/or a receiver.

A third aspect relates to a method of manufacturing an optical antenna device. The method comprises: arranging a platform for photonic devices; and modifying the platform for photonic devices such that a grating coupler for radiating and/or capturing light of at least one wavelength is formed, the grating coupler comprising at least one core material, the grating coupler being planar along first and second axes that are one perpendicular to the other. The modifying is conducted such that a plurality of perturbations is formed of the at least one core material and sequentially arranged one after the other along the first axis, each perturbation of the plurality of perturbations comprising a plurality of regions that are arranged sequentially one after the other along the first axis, a length of each region of the plurality of regions being shorter than a first order Bragg period and/or than the at least one wavelength, and a sum of the lengths of the plurality of regions being equal to the length of the respective perturbation, and one or more optical properties of at least two regions of the plurality of regions of a respective perturbation being different.

In some embodiments, the modifying is conducted such that an evanescent coupler and/or a transition waveguide are/is formed, wherein the evanescent coupler is communicatively coupled with the grating coupler, and wherein the transition waveguide is communicatively coupled with and adjacent to the grating coupler.

In some embodiments, the modifying comprises etching.

The at least one core material is etched to produce the plurality of perturbations and, in turn, to manufacture the optical antenna device in a cost-efficient manner.

In some embodiments, the optical antenna device is manufactured with a single etching step.

In some embodiments, the manufactured optical antenna device is an optical antenna device according to the first aspect. Accordingly, the features about the optical antenna device as described in the first aspect can also be produced with this method.

A fourth aspect relates to a method of radiating light of at least one wavelength. The method comprises: coupling the light into a grating coupler; and propagating the light at least along the first axis and through at least a portion of the grating coupler to radiate at least part of the propagated light. The grating coupler is a grating coupler of an optical antenna device according to the first aspect.

In some embodiments, the light propagated has quasi-TE polarization.

In some embodiments, the light propagated has quasi-TM polarization.

In some embodiments, the grating coupler is part of an optical antenna device according to the first aspect. Accordingly, the features about the optical antenna device as described in the first aspect can also be used with this method.

## BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:

Figure 1 shows an optical antenna device according to some embodiments.
Figure 2 shows an optical antenna device according to some embodiments.
Figure 3 shows an optical antenna device according to some embodiments.
Figure 4 shows an optical antenna device according to some embodiments.
Figure 5 shows a graph of an exemplary radiation strength versus duty cycle attained by optical antenna devices according to some embodiments.
Figure 6 shows an optical antenna device according to some embodiments.

Figure 7 shows an optical antenna device according to some embodiments.

Figures 8A and 8B show exemplary radiation angles attained by optical antenna devices according to some embodiments for different duty cycles and radiation periods.

Figures 9A and 9B show exemplary radiation angles attained by optical antenna devices according to some embodiments for different radiation periods, duty cycles and radiation strength.

Figures 10A and 10B show exemplary fabrication tolerances for a normalized radiation strength and particular radiation angles.

Figure 11 shows an exemplary far-field diagram with radiation attained by optical antenna devices according to some embodiments.

## DETAILED DESCRIPTION

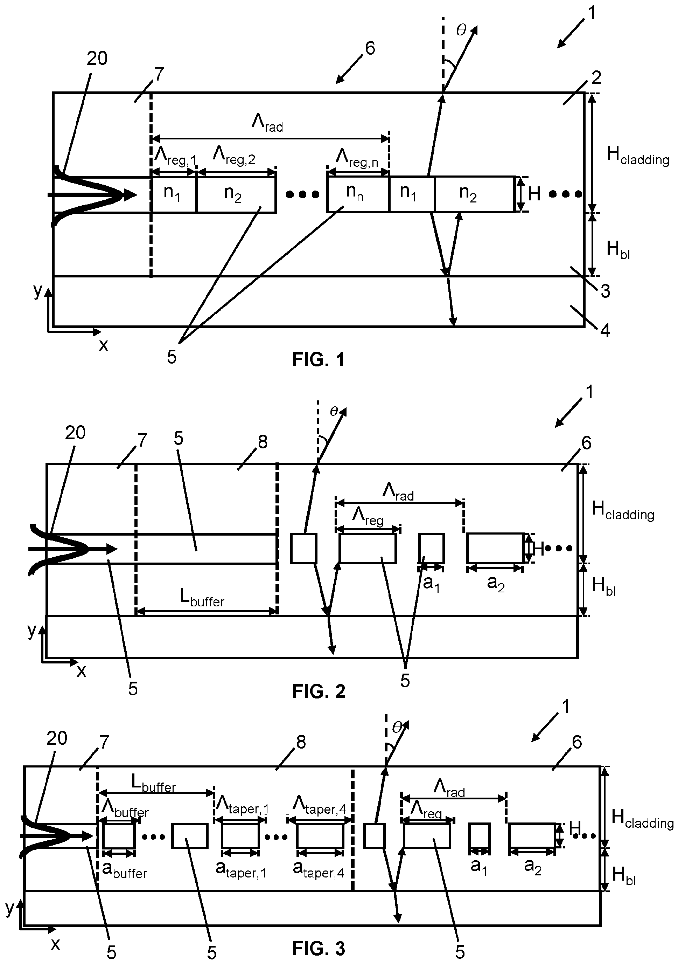

Figure 1 shows an optical antenna device 1 according to some embodiments. The optical antenna device 1 includes a platform such as, but without limitation, a silicon-on-insulator platform that has a cladding 2 with thickness $H_{cladding}$, a buried layer 3 (e.g., a buried oxide layer, BOX) with thickness $H_{bl}$, a substrate 4, and at least one core material 5 with thickness between zero and H and arranged such that two or more perturbations with period $\Lambda_{rad}$ are formed along a first axis, corresponding to illustrated axis x, in a grating coupler 6. Each perturbation fulfills $\Lambda_{rad} > \lambda/2n_B$ , where $\lambda$ is a wavelength of the light or a highest wavelength of the light propagated through the device 1, and $n_B$ is the Bloch-Floquet effective index of the grating coupler 6. The optical antenna device 1 also includes, in addition to the grating coupler 6, an input waveguide 7 for coupling light 20 into the grating coupler 6 and/or out of the grating coupler 6.

The two or more perturbations are the same in this example, and include two or more regions with period $\Lambda_{reg}$. In this example, each perturbation includes n regions, with n being greater than one (1), thereby providing respective periods $\Lambda_{reg,1}$, $\Lambda_{reg,2}$, and $\Lambda_{reg,n}$, which, in some embodiments, are the same whereas, in some other embodiments, periods of two or more regions are different. Each region has its respective effective refractive index $n_1$, $n_2$ and $n_n$.

In some embodiments, the total length of the two or more perturbations, which in many embodiments coincides with the total length of the grating coupler 6, is equal to or greater than twenty times the wavelength of the light 20. That is to say, $\Sigma\Lambda_{rad} \geq 20\lambda$.

In some embodiments, each or some regions of the two or more regions are subwavelength. That is to say, the regions are SWG grating structures with SWG periods, e.g., $\Lambda_{SWG,1}$, $\Lambda_{SWG,2}$, and/or $\Lambda_{SWG,n}$. Each SWG period fulfills $\Lambda_{SWG} < \lambda/2n_B$ where $\lambda$ is a wavelength of the light or a highest wavelength of the light propagated through the device 1, and $n_B$ is the Bloch-Floquet effective index of the grating coupler 6. SWG grating structures may provide substantially homogeneous performance for light propagation, either for radiation thereof or once captured by the optical antenna device 1 and propagates towards a port.

As light 20 propagates along the first axis of the grating coupler, part thereof gets radiated off from the optical antenna device 1 with a radiation angle $\theta$ with respect to the medium where the optical antenna device 1 is in (e.g., air), part thereof gets reflected off from the substrate 4, and part thereof gets through the substrate 4 as illustrated with arrowed lines for the sake of clarity only. The radiation angle $\theta$ is measured with respect to illustrated axis y perpendicular to the illustrated axis x and which corresponds to the thickness axis of the optical antenna device 1.

Figure 2 shows an optical antenna device 1 according to some embodiments. The optical antenna device includes a grating coupler 6, an input waveguide 7, and a transition waveguide 8 therebetween for adapting the mode of the light 20 and reduce back-reflections. Each of the input waveguide 7 and the transition waveguide 8 is provided in the platform of the grating coupler 6 as described with reference to the embodiments of Figure 1 and, thus, also include the cladding, the buried layer, the substrate and the at least one core material 5.

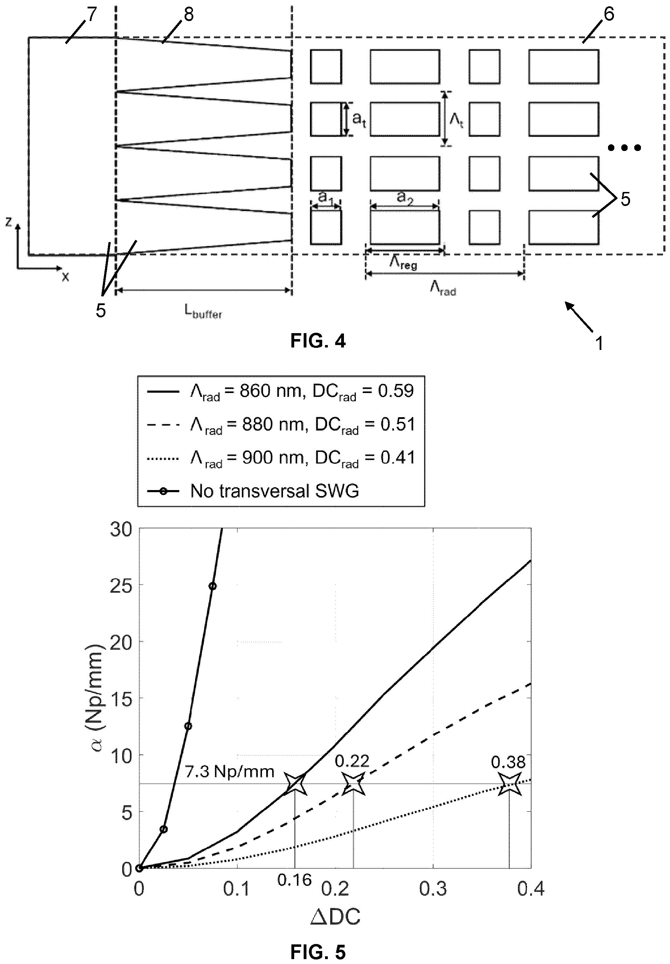

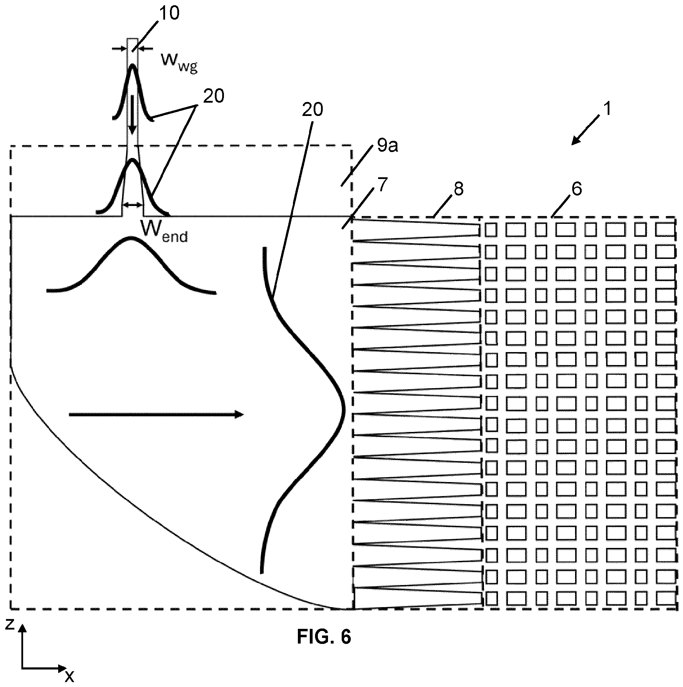

In the embodiments of Figure 2, the at least one core material 5 in the transition waveguide 8 is maintained completely along the length $L_{buffer}$ of the transition waveguide 8 according to the first axis. Some core material 5 may be removed with respect to a second axis perpendicular to the first axis and not illustrated in the view of Figure 2 (it is the axis going inside or outside the sheet), like in the embodiments of Figures 4 and 6, for example. By contrast, in the embodiments of Figure 3 that depicts an optical antenna device 1 according to some other embodiments, the at least one core material 5 has been patterned to form different regions and segments. Particularly, in these latter embodiments, a plurality of segments with buffer periods $\Lambda_{buffer}$ are provided along the length $L_{buffer}$, each with at least one segment $a_{buffer}$ along the first axis. Beyond the segments in a buffer region (i.e., that of length $L_{buffer}$), further segments may be provided between said buffer region and the grating coupler 6. Such segments may be, for example, tapers with periods $\Lambda_{taper}$. In the embodiments illustrated in Figure 3, there are multiple segments on the at least one core material 5 with periods from $\Lambda_{taper,1}$ to $\Lambda_{taper,4}$. Each taper segment has a respective length $a_{taper,1}$-$a_{taper,4}$, that may be the same or different. Although a number of tapers are part of the taper region, it will be noted that other embodiments include fewer or more tapers.

The transition waveguide 8 and, in some cases, the input waveguide 7 are preferably adapted to provide the light 20 with a smooth transition from an input port to the grating coupler 6 and vice versa. The transition waveguide 8 or at least a buffer region thereof provides a seamless or a more seamless transition between the input waveguide 7 and the grating coupler 6. In addition to reducing back-reflections, such transition may facilitate, in some embodiments, homogeneous etching conditions along the grating coupler 6 as well.

Each region of the perturbations in the grating coupler 6 has a respective length $a_1$, $a_2$, etc., along the first axis. Different duty cycles within a perturbation or several perturbation may be set, for example, by way of adjusting the lengths of such region and, hence, the following is fulfilled:

$$\Delta DC = DC_2 - DC_1 = a_2 / \Lambda_{reg,2} - a_1 / \Lambda_{reg,1},$$

The operation and performance of the grating coupler 6 for the most part depends on three parameters: a pitch of the radiation period $\Lambda_{rad}$; a mean duty cycle of at least two different parts of a region $DC_{mean} = (DC_1 + DC_2) / 2$; and the difference between the duty cycles of the regions $\Delta DC$. The radiation angle has a weak dependence on the difference of duty cycles $\Delta DC$ as seen the grating equation in a first radiation zone;

$$\theta = \arcsin(n_B - \lambda/\Lambda_{rad})$$

Where $n_B$ is the effective index of the Bloch mode of the grating coupler 6, $\lambda$ is the wavelength of the light 20 and $\theta$ is the radiation angle.

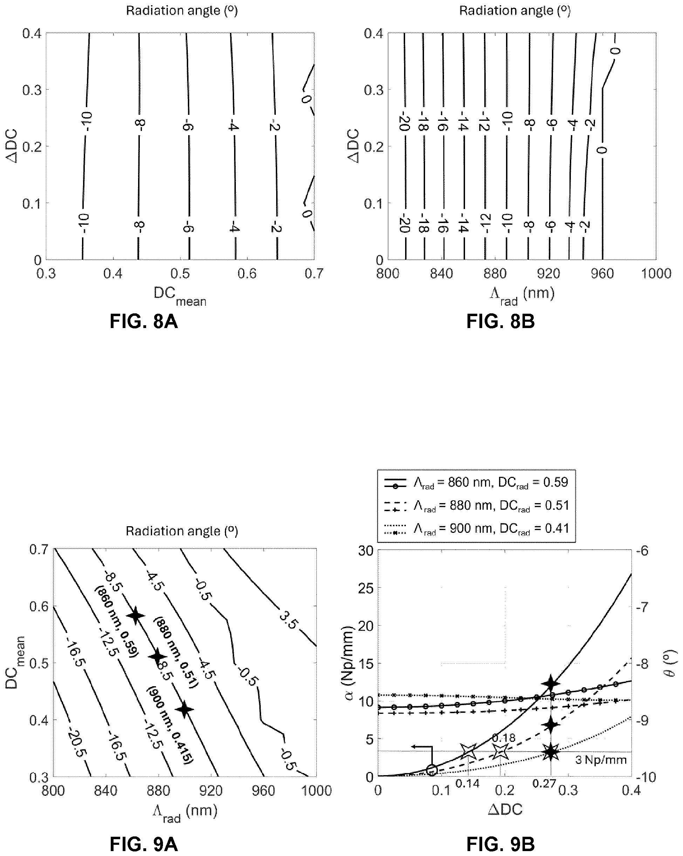

The radiation angle depends on $\Lambda_{rad}$ and $n_B$. When $\Delta DC$ changes, but $DC_{mean}$ does not change, the effective index $n_B$ of the mode changes slightly. Figures 8A and 8B illustrate examples of this behavior as they show the radiation angle $\theta$ versus $\Delta DC$ and $DC_{mean}$ or $\Lambda_{rad}$. Contour lines in the graphs of Figures 8A and 8B are almost vertical until a Bragg zone is reached, showing that the radiation angle $\theta$ has little dependence on $\Delta DC$ in the first radiation zone.

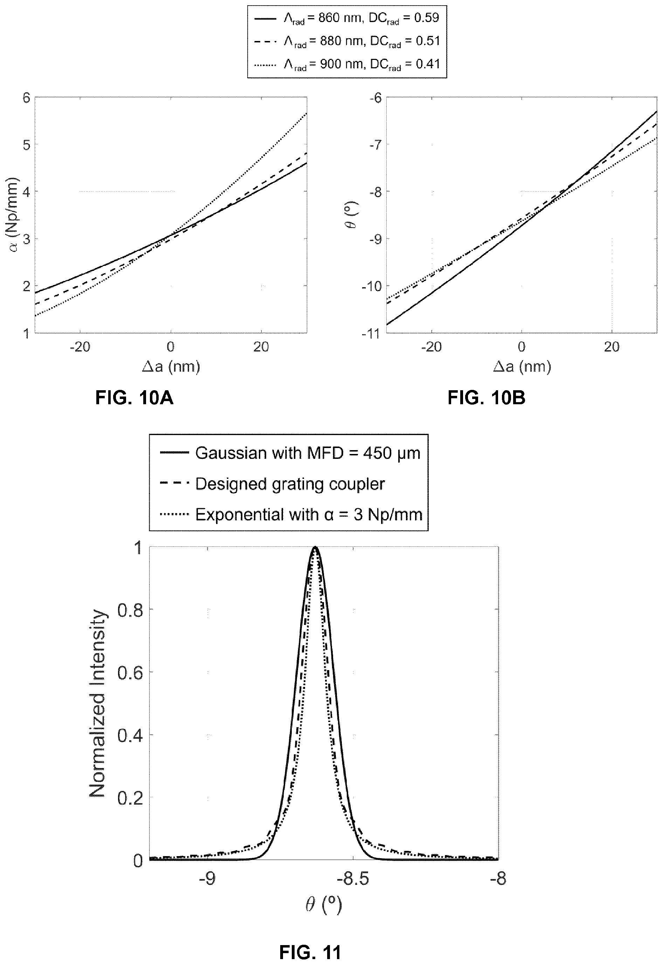

Further, Figures 9A and 9B illustrate examples of the radiation angle $\theta$ plotted versus $DC_{mean}$ and $\Lambda_{rad}$ for an exemplary $\Delta DC$, in this example $\Delta DC = 0.27$, and a normalized radiation strength or Bloch-Floquet field decay factor $\alpha$ versus $\Delta DC$. Several exemplary points (illustrated with stars for the sake of clarity only) can be identified for target radiation angles $\theta$, which correspond to different combinations of pairs $DC_{mean}$ and $\Lambda_{rad}$. For example, a radiation angle $\theta$ of -8.5 degrees can be of interest since it is close to vertical radiation (corresponding to 0 degres) with a safe margin to avoid working in the Bragg regime associated with the vertical radiation. The illustrated exemplary points correspond to: $\Lambda_{rad} = 880$ nm, $DC_{mean} = 0.525$; $\Lambda_{rad} = 900$ nm, $DC_{mean} = 0.44$; $\Lambda_{rad} = 920$ nm, $DC_{mean} = 0.35$. As seen in Figure 9B, the radiation strength $\alpha$ grows exponentially with $\Delta DC$, and large mode field diameters can be attained with reduced values of $\Delta DC$. It can also be seen that the radiation angle changes at maximum about 0.5 degrees in the entire sweep, which is convenient for straightforward apodization of the grating coupler 6. For a radiation strength $\alpha$ of 3 Np/mm, a mode field diameter (i.e., MFD) of 450 $\mu$m may be achieved, thereby providing the exemplary far-field diagram illustrated in Figure 11, for example, compared to a radiation diagram of a theoretical Gaussian of MFD of 450 $\mu$m.

As it can be observed from Figures 9A and 9B, an apodized design of such exemplary MFD of 450 $\mu$m has a maximum required strength of $\alpha = 6$ Np/mm, thus for an $\Delta DC$ of 0.37. The radiation efficiency, i.e., the amount of power radiated upwards to free space, has little variation between the different points: 62 %, 63 %, 64 % for the three illustrated points A, B and C, respectively. This means that the manufacturing of the optical antenna device 1 can be done with considerations such as tolerances and fabrication errors, or minimum feature size. In this sense, Figures 10A and 10B, which show exemplary fabrication tolerances for a normalized radiation strength and particular radiation angles, can be used to observe how the radiation strength changes when the lengths of segments of regions, e.g., $a_1$ and $a_2$, are increased or decreased by a factor $\Delta a$, namely, $a'_1 = a_1 + \Delta a$ and $a'_2 = a_2 + \Delta a$. For a $\Delta a$ of $\pm 30$ nm, corresponding to such an error in the lengths of the segments along the first axis during manufacturing of the optical antenna device 1, the radiation strength increases or decreases approximately by a factor of 1.5 to 1.8, and the radiation angle varies $\pm 2$ degrees. These graphs show that given combinations of parameters can be selected to manufacture an optical antenna device 1 with little radiation angle variations in presence of fabrication errors, which is particularly important for mass-production of devices.

Figure 4 shows an optical antenna device 1 according to some embodiments. In these embodiments, the optical antenna device 1 also includes segments along a second axis, corresponding to the illustrated axis z, perpendicular to the first axis.

Accordingly, the grating coupler 6 is provided with a plurality of perturbations along the first axis, as described and/or illustrated with reference to the embodiments of Figures 1 to 3, and a plurality of segments along the second axis.

The plurality of segments preferably fulfills a subwavelength condition, that way, fewer secondary lobes, i.e., sidelobes, are generated, and/or secondary lobes are generated but with lower intensity, thereby impacting less in the radiation efficiency of the optical antenna device 1. The subwavelength condition along the second axis also makes the optical antenna device 1 less sensitive to changes in $\Delta DC$ as shown in Figure 5, where it can be observed that, for example, a transversal period $\Lambda_t$ of 400 nm and a segment length along the second axis $a_t$ of 220 nm provides same MFD with higher tolerance to variations in ΔDC.

A length $L_{buffer}$ and a width of the tapers of the transition waveguide 8 that are adjacent to the grating coupler 6 may be configured to reduce impact on the performance of the optical antenna device 1 due to fabrication errors.

Figure 6 shows an optical antenna device 1 according to some embodiments. The device 1 includes the grating coupler 6, the input waveguide 7, the transition waveguide 8, a parabolic mode expansor 9a and an interconnecting waveguide 10.

The transition waveguide 8 has the at least one core material 5 extending completely along the first axis, but has core material 5 removed along the second axis, i.e., the illustrated axis z, to form, e.g., a fork-like structure; other embodiments include other structures that are configured to reduce back-reflections.

The input (or output) port of the optical antenna device 1 may have a width $W_{wg}$ for the injection or extraction of light 20 of certain modes, and is widened to a width $W_{end}$ as it reaches the parabolic mode expansor 9a. The parabolic mode expansor 9a widens the mode of the light 20 when injected to the input port and propagated towards the grating coupler 6 through the input waveguide 7 and transition waveguide 8, and narrows it when propagating light 20 the other way around.

The two-dimensional arrangement of perturbations and segments in the grating coupler 6 makes the optical antenna device 1 more suitable for propagation and radiation of light 20 of TE polarization. To this end, the period of the transverse segments, i.e., the segments along the illustrated axis z, preferably fulfills the SWG condition:

$$\Lambda_t < \lambda_m/2$$

Where $\lambda_m$ is the minimum wavelength in the top and bottom claddings.

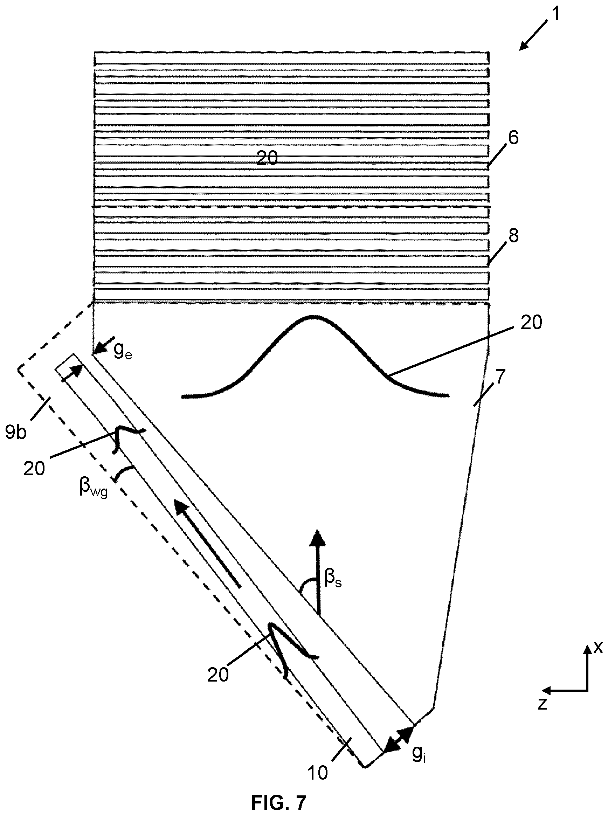

Figure 7 shows an optical antenna device 1 according to some embodiments. The device 1 includes the grating coupler 6, the input waveguide 7, the transition waveguide 8, an evanescent coupler 9b and an interconnecting waveguide 10.

The evanescent coupler 9b preferably is apart from the interconnecting waveguide 10 by a gap that may not be constant and, thus, range between $g_i$ and $g_e$. The arrangement between the two is such that, as known in the art, the light 20 is coupled more effectively by adjusting $\beta_{wg}$ and $\beta_s$.

Like with the parabolic mode expansor 9a, the evanescent coupler 9b widens the mode of the light 20 when propagating towards the grating coupler 6 and narrows the mode of the light 20 when propagating the other way around. The widening of the mode of the light 20 may be, for example but without limitation, from a single-mode waveguide to a Gaussian slab mode of, e.g., an MFD of 100 $\mu$m.

Although the above Figures show optical antenna devices 1 in a radiation configuration according to the arrowed lines showed, it will be noted that the optical antenna devices may be configured for additionally or alternatively capture light 20 from free space or another device and couple it into the grating coupler 6.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

1. An optical antenna device (1) for radiating and/or capturing light (20) of at least one wavelength, the optical antenna device comprising a grating coupler (6) comprising at least one core material (5), wherein the grating coupler is planar along a first axis (x) and a second axis (z) that are perpendicular, wherein the at least one core material is arranged such that at least two perturbations ($\Lambda_{rad}$) are formed such that the perturbations thereof are sequentially arranged one after the other along the first axis, each of the at least two perturbations comprises at least two regions ($\Lambda_{reg}$) along the first axis, wherein a length ($\Lambda_{reg}$) of each region of the at least two regions is shorter than half of the at least one wavelength divided by a Bloch-Floquet effective index of the grating coupler and a sum of the lengths of the at least two regions equals the length of the respective perturbation, wherein one or more optical properties of at least two regions of the at least two regions of a respective perturbation are different, and wherein the at least two perturbations are formed such that a total length of the at least two perturbations along the first axis is greater than twenty times the at least one wavelength.

2. The optical antenna device (1) of claim 1, wherein lengths along the first axis (x) of at least two regions ($\Lambda_{reg}$) of the at least two regions of one, some or each perturbation of the at least two perturbations ($\Lambda_{rad}$) are different.

3. The optical antenna device (1) of any one of the preceding claims, wherein duty cycles of at least two regions ($\Lambda_{reg}$) of the at least two regions are different.

4. The optical antenna device (1) of any one of the preceding claims, wherein one, some or all regions ($\Lambda_{reg}$) of the at least two regions each is a subwavelength, SWG, grating structure ($\Lambda_{SWG}$) with a length thereof being shorter than half of the at least one wavelength divided by the Bloch-Floquet effective index.

5. The optical antenna device (1) of any one of the preceding claims, wherein each perturbation ($\Lambda_{rad}$) of the at least two perturbations comprises at least two segments ($a_t$) sequentially arranged one after the other along the second axis (z).

6. The optical antenna device (1) of any one of the preceding claims, further comprising a modal adapter communicatively coupled with the grating coupler (6) and adapted to widen a mode of light (20) reaching an end closest to the grating coupler, the modal adapter optionally being an evanescent coupler (9b) or a parabolic mode expansor (9a).

7. The optical antenna device (1) of any one of the preceding claims, further comprising a transition waveguide (8) communicatively coupled with and adjacent to the grating coupler (6), the transition waveguide being adapted to reduce back-reflection from the grating coupler.

8. The optical antenna device (1) of any one of the preceding claims, wherein the at least two regions ($\Lambda_{reg}$) comprise three or more regions sequentially arranged one after the other along the first axis (x).

9. The optical antenna device (1) of any one of the preceding claims, wherein the grating coupler (6) is configured such that a light propagation direction at least comprises the first axis (x).

10. The optical antenna device (1) of any one of the preceding claims, wherein the at least two perturbations ($\Lambda_{rad}$) are etched on the at least one core material (5).

11. The optical antenna device (1) of any one of the preceding claims, wherein the at least one core material (5) comprises a single core material.

12. A method of manufacturing an optical antenna device (1), comprising:

   arranging a platform for photonic devices; and modifying the platform for photonic devices such that a grating coupler (6) for radiating and/or capturing light (20) of at least one wavelength is formed, the grating coupler comprising at least one core material (5), the grating coupler being planar along first and second axes (x,z) that are one perpendicular to the other;
   wherein the modifying is conducted such that at least two perturbations ($\Lambda_{rad}$) are formed of the at least one core material and sequentially arranged one after the other along the first axis (x), wherein periods of each perturbation of the at least two perturbations are the same or substantially the same, each perturbation of the at least two perturbations comprising at least two regions ($\Lambda_{reg}$) that are arranged sequentially one after the other along the first axis, a length ($\Lambda_{reg}$) of each region of the at least two regions being shorter than half of the at least one wavelength divided by a Bloch-Floquet effective index and a sum of the lengths of the at least two regions being equal to the length of the respective perturbation, one or more optical properties of at least two of said regions of a respective perturbation being different, and the at least two perturbations are formed such that a total length thereof along the first axis is greater than twenty times the at least one wavelength.

13. The method of claim 12, wherein the modifying is conducted such that a modal adapter and/or a transition waveguide (8) are/is formed, wherein the modal adapter is communicatively coupled with the grating coupler (6), and wherein the transition waveguide is communicatively coupled with and adjacent to the grating coupler, and the modal adapter optionally being an evanescent coupler (9b) or a parabolic mode expansor (9a).

14. The method of any one of claims 12-13, wherein the modifying comprises etching, and wherein the optical antenna device (1) is manufactured with a single etching step.

15. A method of radiating light (20) of at least one wavelength, comprising:

   coupling the light into a grating coupler (6), wherein the grating coupler is of an optical antenna device (1) according to any one of claims 1-11; and
   propagating the light at least along the first axis (x) and through at least a portion of the grating coupler to radiate at least part of the propagated light.

**FIG. 1**

**FIG. 2**

**FIG. 3**

**FIG. 4**

Legend:
- $\Lambda_{rad} = 860$ nm, $DC_{rad} = 0.59$
- $\Lambda_{rad} = 880$ nm, $DC_{rad} = 0.51$
- $\Lambda_{rad} = 900$ nm, $DC_{rad} = 0.41$
- No transversal SWG

**FIG. 5**

11

**FIG. 6**

**FIG. 7**

**FIG. 8A**

**FIG. 8B**

**FIG. 9A**

**FIG. 9B**

FIG. 10A

FIG. 10B

FIG. 11

Europäisches
Patentamt
European
Patent Office
Office européen
des brevets

## EUROPEAN SEARCH REPORT

**Application Number**

EP 24 18 2927

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 289 386 A (UNIV YANGZHOU) 26 December 2023 (2023-12-26) * paragraph [0041] * * paragraph [0045] - paragraph [0046] * * paragraph [0062] * * paragraph [0065]; figures 1-3 * ----- | 1-15 | INV. G02B6/34 |
| A | NEIL NA ET AL: "Efficient broadband silicon-on-insulator grating coupler with low backreflection", OPTICS LETTERS, OPTICAL SOCIETY OF AMERICA, US, vol. 36, no. 11, 1 June 2011 (2011-06-01), pages 2101-2103, XP001563375, ISSN: 0146-9592, DOI: 10.1364/OL.36.002101 [retrieved on 2011-05-31] * page 2102; figure 3 * ----- | 7 | |

**TECHNICAL FIELDS SEARCHED (IPC)**

G02B

The present search report has been drawn up for all claims

| Place of search | Date of completion of the search | Examiner |
|---|---|---|
| The Hague | 6 December 2024 | Mouget, Mathilde |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
.....................................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 18 2927

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | Publication date | Patent family member(s) | Publication date |
|---|---|---|---|
| CN 117289386 A | 26-12-2023 | NONE | |

EPO FORM P0459

For more details about this annex : see Official Journal of the European Patent Office, No. 12/82